# EUROPEAN PATENT APPLICATION

(11) **EP 4 152 592 A1**
(43) Date of publication of application: **22.03.2023**
(21) Application number: 21197773.1
(22) Date of filing: 20.09.2021
(51) Int. Cl.: H02P 6/08

(54) **DEVICE AND METHOD FOR CONTROLLING A MOTOR, ESPECIALLY OF A WASHING MACHINE**

(71) Applicant: Vestel Elektronik Sanayi ve Ticaret A.S., 45030 Manisa (TR)
(72) Inventor: KARATAS, Mustafa, 45030 Manisa (TR)
(74) Representative: Kehl, Ascherl, Liebhoff & Ettmayr Patentanwälte Partnerschaft mbB

(57) **Abstract**

The present disclosure relates to a method and a device (100) for controlling a motor (101) configured to rotate a cavity unit (102), especially a basket (202) of a washing machine (200) or a dryer, whereas the cavity unit (102) is rotatable by the motor (101) via a mechanical shaft (103) coupling the motor (101) and the cavity unit (102), comprising at least one sensor (104) configured to detect a radial shaft position in a cross-sectional plane (P) of the shaft during rotation of the cavity unit (102), comprising a control unit (105) connected to the at least one sensor (104), whereas the control unit (105) is configured to provide pulse width modulated signals (PWM1, PWM2, PWM3, PWM4, PWM5) to the motor (101) for controlling the motor (101) based on the detected radial shaft position, whereas the control unit (105) is configured to provide such pulse width modulated signals (PWM1, PWM2, PWM3, PWM4, PWM5) that the radial shaft position approaches a desired radial shaft position during rotation of the cavity unit (102).

## Description

### TECHNICAL FIELD

The disclosure relates to device for controlling a motor configured to rotate a cavity unit, especially a basket for a washing machine or a dryer, whereas the cavity unit is rotatable by the motor via a mechanical shaft coupling the motor and the cavity unit.

### BACKGROUND

When a cavity unit, e.g. like a closed vessel suitable to receive articles or material to be rotated, is rotated with a motor, it can happen, that imbalances occur during the rotation of the cavity unit. Such imbalances are often related to mass-distributions of the articles or material stored inside the cavity unit. In such cases the cavity unit does not rotate uniformly but provides different loads to the motor during a rotation, e.g. the torque of inertia of the cavity unit varies during a rotation.

These imbalances can lead to vibrations of the cavity unit and noise during rotation. If the imbalances increase over a certain threshold, components of the device, e.g. the motor or mountings of the cavity unit, can be damaged or destroyed.

For this reason, imbalances during the rotation of the cavity unit need to be monitored and controlled during operation to avoid critical situations which might damage the device.

The disclosure is specifically applicable for washing machines and/or dryers comprising as cavity unit a basket, which defines a chamber for receipt of articles for washing and/or drying.

The balancing is significant for a washing machine because articles in the basket can access high speed acceleration and high torque of inertia, especially during the spin step performed by the washing machine.

Such a spin step, typically performed for removing wetness from the articles in the basket, can typically have an average duration of 25 minutes. Typically, the motor rotation is up to -15000 rpm to reach -1600 rpm for the basket rotations. These high rotation energies can lead to a breakdown or to damage for the washing machine, if an imbalance occurs during the spin step.

However, the teaching disclosed in this application can also be applied to other cavity units configured to receive materials or articles, which are processed by rotating the cavity unit with a motor and is not limited to washing machines or dryers.

The prior art already deals with approaches to handle such imbalance situations.

In this context US 2017327988 A1 discloses an inverter drive control system which includes a feedback system to control the operation of the motor. The feedback control system includes at least one current sensor configured to monitor the single-phase current supplied to the motor. According to an example aspect, an out of balance condition can be detected for the washing machine using the existing inverter drive control system for the washing machine by measuring a single-phase current of the motor.

Another approach is disclosed in US 2020378051 A1. This document discloses a washing machine which is enabled to determine an out-of-balance mass by measuring in a predetermined dwell period with a set dwell speed a displacement of the tube of the washing machine. Based on this displacement of the tube the out-of-balance mass is determined. However, US 2020378051 A1 does not disclose how this determined out-of-balance mass is used to improve the operation of the washing machine.

Thus, it is object of the invention to provide a solution for handling an out-of-balance situation for a rotating cavity unit, especially a basket of a washing machine.

### SUMMARY

The above stated problem is solved by the features of the independent claims. It is understood that independent claims of a claim category may be formed in analogy to the dependent claims of another claim category. Further embodiments of the present disclosure are subject of the further dependent claims and of the following description, referring to the drawings.

Accordingly, it is provided a device for controlling a motor configured to rotate a cavity unit, especially a basket of a washing machine or a dryer, whereas the cavity unit is rotatable by the motor via a mechanical shaft coupling the motor and the cavity unit, comprising at least one sensor configured to detect a radial shaft position in a cross-sectional plane of the shaft, especially perpendicular to a center axis, during rotation of the cavity unit, comprising a control unit connected to the at least one sensor, whereas the control unit is configured to provide pulse width modulated signals to the motor for controlling the motor based on the detected radial shaft position, whereas the control unit is configured to provide such pulse width modulated signals that the radial shaft position approaches a desired radial shaft position during rotation of the cavity unit.

The presented teaching has the effect that imbalances in the cavity unit while it is rotated, which might damage the motor, can be determined via detecting a displacement of the shaft coupling the motor and the cavity unit. This means a direct measurement can be performed on a mechanical component directly effected or generated by the imbalance before any effect might be seen from a current sensor in the motor. In addition, no separate dwell periods need be to implemented.

The at least one sensor, which can be any sensor enabled to detect a displacement of the shaft, especially in a cross-sectional plane of the shaft, detects a radial position. E.g. such sensor can work on basis of induction or capacity measurements to receive information about its environment and any changes in that regard. However, suitable sensor can also utilize other technical work modes to detect a radial position of the shaft.

In case of an imbalance situation the radial position of the shaft is displaced from a desired radial position, which is detectable by the at least one sensor. So, the sensors can detect imbalances before they take effect via the motor or before they become visible with current sensors. '

The presented device therefore enables a feed-forward-control method of the motor as the imbalances become visible first in the displacement of the shaft before the motor is affected. This means the control of monitor is changed before the motor has been exposed to any critical conditions. This provides additional safety for the control, respectively for the motor and the cavity unit, as critical situations are detectable in an early stage.

Cavity unit shall be understood as container or receptacle, which can receive material or articles, like clothes, to process them by rotating the container or receptable without the material or articles leave the cavity unit during rotation. This means the articles or material is processed for a certain time in the cavity unit.

For washing machines, the basket receiving the articles to be washed can be considered as the cavity unit. However, also e.g. a mill for grinding materials, e.g. like coffee or other substances, can comprise such cavity unit.

The shaft can be directly coupled to the motor and the cavity unit. However, the shaft can also be indirectly coupled to the motor and the cavity unit, e.g. via a gear to adapt the rotation of the motor to the rotation of the cavity unit. This means the motor and the cavity unit are coupled such via the shaft that the motor can cause the rotation of the cavity unit in a controlled manner.

The shaft, if operated in a balanced condition, is positioned on a center axis which is identical with a desired rotation axis, which means the shaft is positioned centrally on the desired rotation axis.

If it comes to imbalances while rotating the cavity unit, the shaft gets displaced from the center axis. This means the shaft is positioned no longer centrally on the center axis but is displaced from that center axis.

The at least one sensor is enabled to detect the radial position of the shaft, i.e. especially a position or displacement of the shaft in a plane orthogonal to the central axes. This plane can also be called a cross-sectional plane of the shaft.

In context of this disclosure the term detection of the radial position or detect the radial position should be understood broadly. E.g. no exact position coordinates need to be transmitted to the control unit. It is sufficient to provide a signal corresponding to a relative position, e.g. the direction and a displacement of the shaft from a reference point, especially the center axis in the cross-sectional plane, corresponding to such radial shaft position.

The sensor is connected to the control unit, which shall mean that the detected radial position can be provided to the control unit via sensor signals. The control unit is further enabled to provide control signals to the motor.

The motor is driven with pulse width modulation signals. By altering these signals by the control unit, the behavior of the imbalances of the cavity unit can be influenced such that the effects of the imbalances are reduced, also reducing the effects on the shaft, the cavity unit and on the motor. This is reached by providing such pulse width modulated signals from the control unit to the motor that the displacement of the shaft position from the desired shaft position is reduced, especially minimized.

In other words, the motor is controlled such that the imbalance is reduced which has the effect that the shaft position is changed into the direction of the desired shaft position. The desired position is typically the position of the shaft in a balanced situation.

Pulse width modulation, also called pulse duration modulation, is a method of reducing the average power delivered by an electrical signal, by effectively chopping the signal up into time-discrete parts. The average value of voltage (and current) fed to the load, here the motor, is controlled by turning the switch between supply and load on and off at a fast rate. The longer the switch is on compared to the off periods, the higher is the total power supplied to the load. Pulse-width modulation uses typically a rectangular pulse wave whose pulse width is modulated resulting in the variation of the average value of the waveform, e.g. of the current, provided to the load.

Signals utilizing the pulse width modulation are understood to be pulse width modulation signals according to this application. Such signals can be used to control the motion of the motor.

In an embodiment the device comprises a plurality of sensors arranged circumferentially inside the shaft. Especially the plurality of sensors is arranged in the same cross-sectional plane of the shaft. Especially the plurality of sensors is arranged equally spaced to each other. This is one advantageous exemplary way to provide information of the position of the shaft relative to its environment, as the plurality of sensors do not need additional space outside of the shaft. This embodiment provides therefore compact and space-saving arrangement, which can be of importance, if the space around the shaft is very limited.

In a further embodiment the device comprises a plurality of sensors, arranged circumferentially around the shaft and distanced from the shaft. This means there is a gap between the outer circumference of the shaft and the radially distanced sensors.

Therefore, the gap from the shaft to the sensors defines the maximum displacement of the shaft. If this displacement is overcome, one or more sensors will by damaged by the shaft. Especially the plurality of sensors can be arranged circumferentially around the shaft, distanced from the shaft and equally spaced to each other in one cross-sectional plane of the shaft. Such embodiment is easy to implement and can also be back fitted in a later stage.

In a further advantageous embodiment, the device comprises a plurality of sensors, especially four sensors, arranged equally spaced to each other circumferentially around the shaft. In case of four sensor the angle between adjacent positions of the sensors is 90 degree. In case the number n of sensors is higher or lower as four, they can be positioned with an angle distance of 360°/n. Four sensors arranged in such way have shown to be sufficient to detect the radial position, respectively displacement, of the shaft.

In a further embodiment it has shown advantageous, if a magnetic encoder is used as sensor or a plurality of magnetic encoders, especially four, are used as plurality of sensors.

In another embodiment of the device the control unit provides different pulse width modulated signals for different detected radial shaft positions. This means dependent on the actual detected individual shaft positions different pulse width modulated signals are provided from the control unit to the motor to reduce the radial displacement of the shaft. So, the pulse width modulated signals are adapted to the specific imbalance condition represented by the detected radial position of the shaft. The pulse width modulated signals can be calculated, generated or initiated by the control unit based on the detected radial position of the shaft. The pulse with modulated signal to be provided can also be provided by the magnetic encoder and is provided via the control unit to the motor.

In a further embodiment of the device the control unit is configured to access a table of given pulse width modulated signals for controlling the motor dependent on given radial shaft positions, whereas the control unit is configured to select the appropriated pulse width modulated signal from the table based on the detected and received shaft position. This avoids calculation efforts on the control unit side and can increase the speed of reaction of the control unit via the motor, if imbalances are detected via the displacement of the shaft.

For solving the problem, it is accordingly provided a washing machine comprising a motor and a cavity unit, which is a basket that is configured to receive articles to be washed, whereas the motor is configured to rotate the basket via a mechanical shaft, further comprising a device according to one of the claims 1 to 7 to control the motor. For washing machines, the application of such device is highly advantageous as during operation imbalance situations can occur frequently. The application of such device improves the lifetime of the washing machine.

For solving the problem it is further accordingly provided a method for controlling a motor driving a rotating cavity unit; especially a basket for a washing machine or a dryer, whereas the motor rotates the cavity unit via a mechanical shaft, whereas a radial position in a cross-sectional plane, especially perpendicular to a center axis, of the shaft is detected and provided to a control unit, whereas the control unit provides to the motor pulse width modulated signals for controlling the motor based on the detected radial position of the shaft, whereas the pulse width modulated signals are configured such that the radial position is changed in direction to a desired radial position of the shaft.

For solving the problem, it is further accordingly provided a machine-readable program code for a control unit of a device according to one of the claims 1 to 7, whereas the program code comprises control commands which when executed cause the control unit to perform the method according to claim 9.

Such machine-readable program code can be stored on a machine-readable storage medium, on which machine-readable program code according claim 10, can be stored and accessed, e.g. on a local storage of the device or a storage provided via cloud services, which the control unit can access.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a schematic representation of a washing machine comprising a device according to an embodiment of the invention,
Figure 2 shows a sensing arrangement around the shaft in a balanced condition,
Figure 3 shows a sensing arrangement around the shaft in a first unbalanced condition,
Figure 4 shows a sensing arrangement around the shaft in a second unbalanced condition,
Figure 5 shows a sensing arrangement around the shaft in a third unbalanced condition,
Figure 6 shows a sensing arrangement around the shaft in a fourth unbalanced condition,
Figure 7 shows a flow chart diagram for illustrating an embodiment of the method.

In the figures like reference signs denote like elements unless stated otherwise.

### DETAILED DESCRIPTION OF THE DRAWINGS

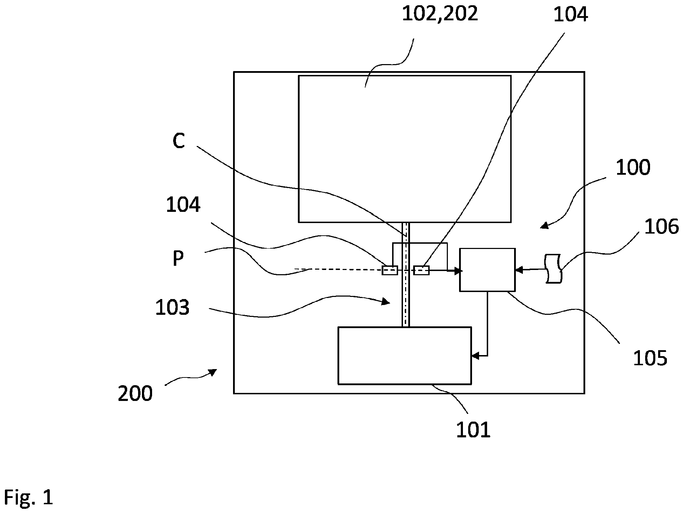

Figure 1 shows a schematic representation as top view on a washing machine 200 comprising a device 100 for controlling a motor 101.

Besides the motor 101 the washing machine 200 comprises a cavity unit 102, which can be rotated by the motor 101 via a shaft 103. The cavity unit 102 is configured as basket 202 for receiving articles to be washed.

It is understood that the arrangement of the motor 101 and the cavity 102 is not limited to a specific configuration, especially of a washing machine. E.g. the device can be used for front loader washing machines or top loader washing machines or totally different applications.

The shaft 103 enabling the transfer of the rotation energy of the motor 101 to the cavity unit 102 comprises a central axis C, which extends in the length direction of the shaft 103. Perpendicular to the central axis C a cross-sectional plane P of the shaft 103 is shown in Figure 1. The central axis C is a desired axis around which the shaft 103 should rotate while the cavity unit 102 is operated, i.e. rotated by the motor 101.

In case of an imbalanced tumbling of articles or material inside the cavity unit 102, imbalances can occur during the rotation of the cavity unit 102 which disturb the operation of the washing machine 200.

To handle imbalances of the cavity unit 102 while the cavity unit 102 is rotated via the motor 101, sensors 104 are arranged circumferentially around the shaft 104 to detect a position of the shaft 103 in the cross-section plane P. The sensors 104 are magnetic encoders which detect the position of the shaft 103 via the change of magnetic fields by the shaft 103.

The number of used sensors 104 for a specific application can vary, however should be chosen such that a sufficiently exact detection of the radial position of the shaft 103 in the cross-sectional plane P can be achieved.

The sensors 104 are connected with a control unit 105. The control unit 105 is connected with motor 101 and configured to control the motor 101 via pulse width modulated signals.

Dependent on the detected radial shaft position the control unit 105 provides pulse width modulated signals to the motor 101 to control the operation motor 101. The control unit 105 is configured such that the control unit 105 provides such pulse width modulated signals to the motor 101 that a detected displacement of the shaft 103 is reduced, respectively the radial position of the shaft 104 in the cross-sectional plane P is moved into the direction of the central axis C.

This means as long as the radial shaft position is positioned on the desired radial position, i.e. the C-axis in the cross-sectional plane, or deviates only insignificantly therefrom, the motor 101 is operated with pulse width modulated signals that provide full power to the motor 101.

In case a radial shaft position is detected that deviates significantly from the desired radial position the control unit 105 provides other pulse width modulated signals to the motor 101, leading to different operation of the motor 101. With such other pulse width modulated signal of different shape compared to a balanced situation, the radial shaft position can be changed to a radial shaft position that is closer to the desired radial position, especially on a desired radial shaft position or within a certain vicinity of the desired radial shaft position. Such pulse width modulated signal can especially provide less power to the motor 101.

The configuration of the control unit 105 comprises the provision of a machine-readable program code 106, comprising control commands, which can control a reaction via the motor 101 in terms of pulse width modulated signals for the motor 101 based on the detected radial position of the shaft 103.

Such pulse width modulated signals can e.g. be provided via control signals of the control unit 105 controlling a respective power supply for the motor 101.

By providing such control of the motor 101 via the control unit 105, imbalances of the cavity unit 102 can be handled fast and effectively. The perturbations of the rotation of the cavity unit 102 typically caused by the imbalance inside the cavity unit 102 can be detected in a very early stage and the motor 101 can be controlled especially such to minimize the effect of imbalances on the shaft 103 and the motor 101.

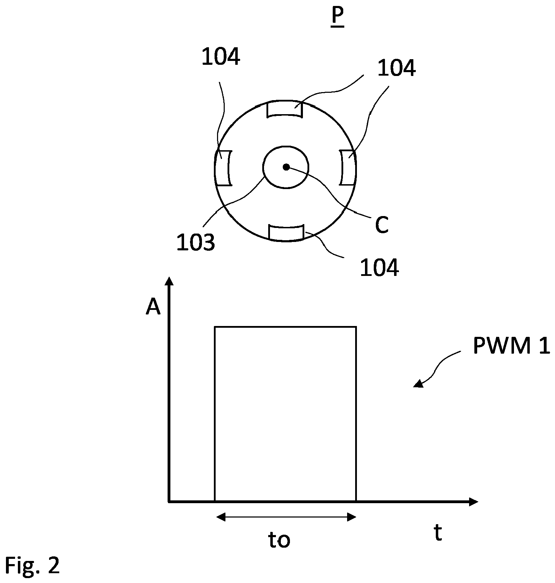

Figure 2 shows a schematic arrangement of shaft 103 coupling the motor and the cavity unit during operation, i.e. during rotation of the cavity unit. In Figure 2 the shaft is positioned in the cross-sectional plane P centrally on the center axis C. Around the shaft 103, in a distance from the shaft, four sensors 104, here magnetic encoders, are positioned circumferentially and equally spaced along the circumference.

In Figure 2 the shaft 103 is shown to be positioned centrally on the center axis C, i.e. the radial shaft position is not radially displaced from the center axis C. This is an indication that the cavity unit is in a balanced condition. Due to this detected shaft 103 position, detected with the sensors 104, the motor can be operated with pulse width modulated signal according to a balanced condition.

Such pulse width modulated signal PWM1 provided to the motor and corresponding to a balanced condition is shown in Figure 2 below the arrangement of the sensors 104 and the shaft 103.

The pulse width modulated signals PWM1 is shaped as one rectangular block with a constant amplitude over a certain time to. So, 100% power output is provided for the motor in a balanced condition.

It is understood that not only one pulse is provided to the motor, but such pulse width modulated signal is frequently provided to the motor to keep it rotating.

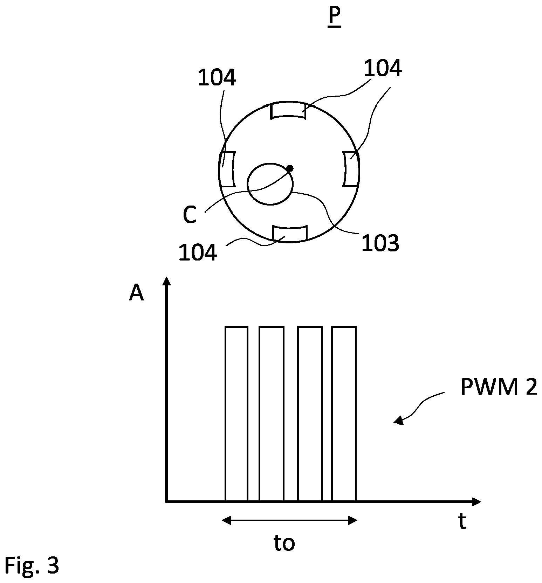

Figure 3 shows the same arrangement of sensors 104 and shaft 103 as Figure 2, however with the difference that the shaft 103 is no longer positioned centrally on the center axis C in the cross-section plane P. This indicates an imbalanced situation. Due to the imbalance inside the cavity unit, the shaft 103 has changed the position radially away from the center axis C.

This radial shaft position is detected via the sensors 104, whose sensor signals provide the information that the shaft is locate closer to the lower sensor and closer to the left sensor considered in viewing direction to Figure 3.

This radial displacement from the central axis C in the cross-sectional plane P corresponds to an imbalanced rotation of the cavity unit. To reduce the imbalance the motor is controlled via the control unit based on the sensor signals representing the radial position of the shaft 103 in the cross-sectional plane P.

The control unit provides as reaction of the detected radial shaft position a pulse width modulated signal PWM2 differing from the pulse width modulated signals in Figure 2.

The pulse width modulated signal PWM2 according to Figure 3 comprises four single timely equidistant pulses, each pulse with same duration, over a time to, each single pulse with amplitude A. Between the pulse width modulated signal PWM2 extents about the same time period to as the pulse width modulated signal according to Figure 2. This differing pulse width modulated signal PWM2 results in a different behavior of the motor, which reduces the displacement of the shaft position relative to the central axis C.

It is understood that the pulse sequence of the pulse modulated signal PWM is provided repeatedly to the motor for operating the motor and can be further changed dependent on newly detected radial positions of the shaft 103.

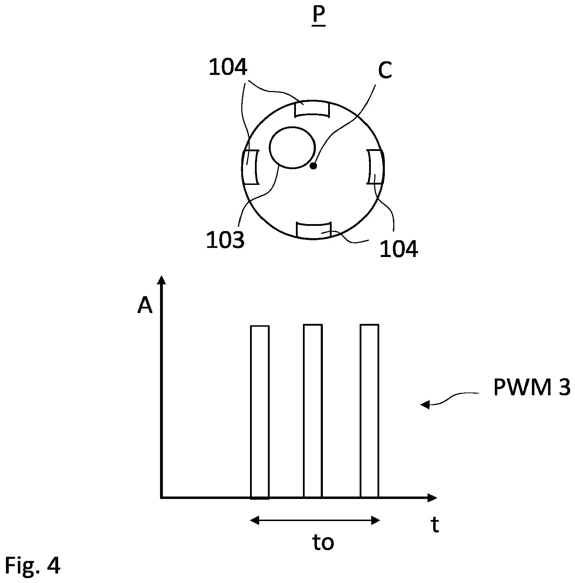

Figure 4 shows the same arrangement of sensors 104 and shaft 103 as Figure 2 and Figure 3, however with the difference that the shaft 103 is again in another radial position compared to Figures 2 and 3 in the cross-section plane P.

Due to the imbalance inside the cavity unit, the shaft 103 has changed the position radially away from the center axis C and is now positioned closer to left sensor 104 and closer to the upper sensor 104 in viewing direction on Figure 4.

This different radial shaft position is again detected via the sensors 104, whose sensor signals provide the information that the shaft is located in cross-sectional plane P as described.

This radial displacement from the central axis C in the cross-sectional plane P corresponds to another imbalanced rotation of the cavity unit. To reduce the imbalance the motor is again controlled via the control unit based on the sensor signals representing the radial position of the shaft 103 in the cross-sectional plane P.

The control unit provides as reaction of the detected radial shaft position another pulse width modulated signal PWM3 differing from the pulse width modulated signals in Figure 2 or Figure 3. The pulse width modulated signal PWM3 according to Figure 4 leads in view of the detected radial shaft position to changed behavior of the motor, which reduces the displacement of the shaft position relative to the central axis C also in this case.

The pulse width modulated signal PWM3 according to Figure 4 has an Amplitude A and comprises three single pulses, each with a certain duration, and timewise equally spaced. The pulse width modulated signal PWM3 also extends over the time period to.

This pulse width modulated signal PWM3 leads to movement of the shaft 103 in the cross-section plane P in the direction of the central axis C. Also, this pulse sequence in form of the pulse width modulated signal PWM3 is provided in repeating manner to the motor.

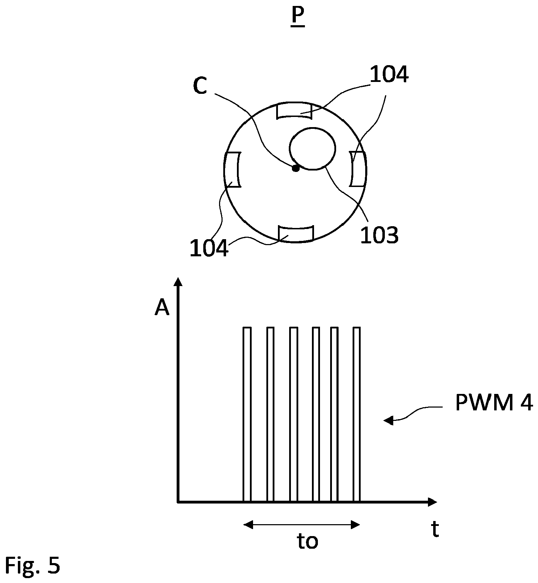

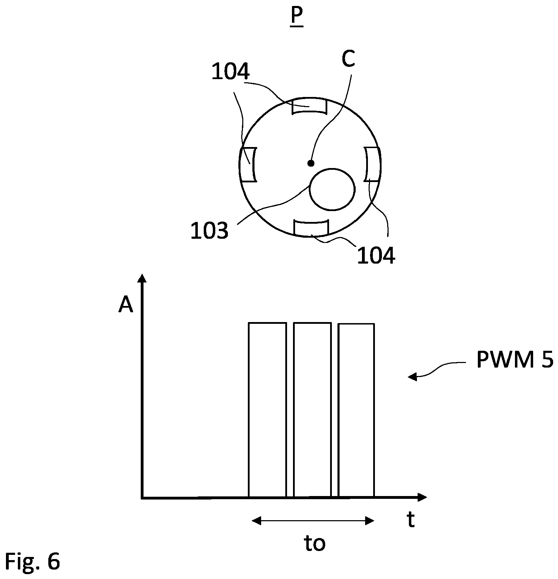

The statements made for Figure 3 and Figure 4 are also valid correspondingly for the Figures 5 and 6 which only deviate by the radial shaft position from the Figures 2 to 4 and the provided pulse width modulation signal provided to the motor to reduce the respectively detected displacement of the shaft by the sensors 104 from the center axis C. In this context another pulse width modulated signal PWM 4 is shown in Figure 5 and another pulse width modulated signal PWM5 is shown in Figure 6 causing that the radial shaft position is getting closer to the central axis C.

In figures 2 to 6 the time interval to over which the pulses width modulated signals extend are equal in any figure. However, this is not necessarily the case. The time interval to of the pulse width modulated signal but also the amplitude can be varied by the control unit to reduce the radial displacement of the shaft.

For avoidance of doubt the control unit does not need to provide fixed pulse width modulation signals for a specific radial shaft position, but can be configured to react flexible, e.g. in an interpolating way, to reduce the displacement of the radial shaft position to the desired radial position.

The control unit can also minimize the radial shaft displacement, e.g. as closed loop control and can further change the provided pulse width modulated signal to the motor to reduce and especially minimize the radial shaft displacement from the center axis.

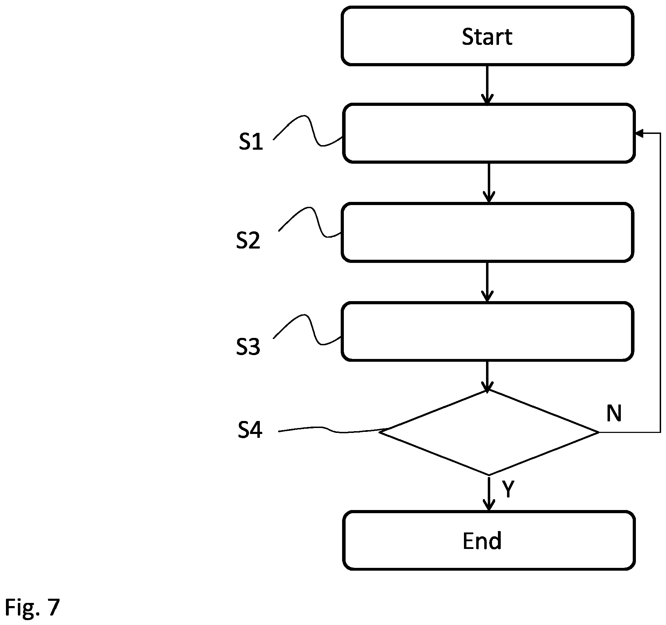

Figure 7 shows a schematic flow chart for controlling a motor, e.g. of a washing machine. The method starts typically when a cavity unit is already rotated by the motor. It can also be initiated together with the start of rotation of the cavity unit or rotation of the motor.

In a first step S1 the radial shaft position is detected in the cross-sectional plane P with respective sensors, e.g. magnetic encoders. In a next step S2 the sensor signals are provided to the control unit. In a further step S3 the control unit determines based on the sensor signals, if an imbalanced situation is given, i.e. if the radial shaft position deviates from the central axis in the cross-sectional plane. In case such deviation is given, the control unit controls the motor in step 4 with pulse width modulation signal such that the deviation of the radial position of the shaft from the central axis in the cross-sectional plane is reduced.

Such pulse width modulated signals for specific detected displacements of the shaft position can be provided e.g. via a look-up table or in another way to the control unit.

In a step S5 it is checked, if the method shall be terminated; as long as the cavity unit rotates with high frequencies it is reasonable to further detect imbalances of the cavity unit to protect the motor and the application device, e.g. the washing machine.

The method can be performed continuously during operation of the washing machine or a respective apparatus comprising the cavity unit, shaft and motor. After the rotation of the cavity stops, e.g. because the spin step is finished, the method can be terminated.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention relates to a method and a device 100 for controlling a motor 101 configured to rotate a cavity unit 102, especially a basket 202 of a washing machine 200 or a dryer, whereas the cavity unit 102 is rotatable by the motor 101 via a mechanical shaft 103 coupling the motor 101 and the cavity unit 102, comprising at least one sensor 104 configured to detect a radial shaft position in a cross-sectional plane P of the shaft during rotation of the cavity unit 102, comprising a control unit 105 connected to the at least one sensor 104, whereas the control unit 105 is configured to provide pulse width modulated signals PWM1, PWM2, PWM3, PWM4, PWM5 to the motor 101 for controlling the motor 101 based on the detected radial shaft position, whereas the control unit 105 is configured to provide such pulse width modulated signals PWM1, PWM2, PWM3, PWM4, PWM5 that the radial shaft position approaches a desired radial shaft position during rotation of the cavity unit 102.

### LIST OF REFERENCE SIGNS

- 100: Device
- 101: Motor
- 102: Cavity unit
- 103: Shaft
- 104: Sensor
- 105: Control unit
- 106: Program code

- 200: Washing machine
- 202: Cavity unit: basket

- C:: Center axis
- P:: Cross-sectional plane of the shaft
- PWM 1:: Pulse Width Modulated Signal, first
- PWM 2:: Pulse Width Modulated Signal. second
- PWM 3:: Pulse Width Modulated Signal, third
- PWM 4:: Pulse Width Modulated Signal, fourth
- PWM 5:: Pulse Width Modulated Signal, fifth

- S1: Detecting the radial position and provision of signal to control unit
- S2: Provision of sensor signals to control unit
- S3: Providing PWM to the motor based on the detected radial position
- S4: End method?

## Claims

1. Device (100) for controlling a motor (101) configured to rotate a cavity unit (102), especially a basket (202) of a washing machine (200) or a dryer, whereas the cavity unit (102) is rotatable by the motor (101) via a mechanical shaft (103) coupling the motor (101) and the cavity unit (102), comprising at least one sensor (104) configured to detect a radial shaft position in a cross-sectional plane (P) of the shaft during rotation of the cavity unit (102), comprising a control unit (105) connected to the at least one sensor (104), whereas the control unit (105) is configured to provide pulse width modulated signals (PWM1, PWM2, PWM3, PWM4, PWM5) to the motor (101) for controlling the motor (101) based on the detected radial shaft position, whereas the control unit (105) is configured to provide such pulse width modulated signals (PWM1, PWM2, PWM3, PWM4, PWM5) that the radial shaft position approaches a desired radial shaft position during rotation of the cavity unit (102).

2. Device according to claim 1,
comprising a plurality of sensors (104) arranged circumferentially inside the shaft (103).

3. Device according to claim 1 or 2,
comprising a plurality of sensors (104) arranged circumferentially around the shaft (103) and distanced from the shaft (103).

4. Device according to claim 3,
comprising the plurality of sensors (104), especially four sensors (104), arranged equally spaced to each other.

5. Device according to one of the preceding claims,
whereas the sensor (104) or the plurality of sensors (104) is configured as a magnetic encoder.

6. Device according to one of the preceding claims,
whereas the control unit (105) provides different pulse width modulated signals (PWM1, PWM2, PWM3, PWM4, PWM5) for different detected radial shaft positions.

7. Device according to one of the preceding claims,
whereas the control unit (105) is configured to access a table of given pulse width modulated signals (PWM1, PWM2, PWM3, PWM4, PWM5) for controlling the motor (101) dependent on given radial shaft positions, whereas the control unit (105) is configured to select the appropriated pulse width modulated signal from the table based on the detected and received radial shaft position.

8. Washing machine (200) comprising a motor (101) and a cavity unit (102) provided as basket (202) configured to receive articles to be washed, whereas the motor (101) is configured to rotate the basket (202) via a mechanical shaft (103), further comprising a device (100) according to one of the preceding claims to control the motor (101).

9. Method for controlling a motor (101) driving a rotating cavity unit (102), especially a basket (202) for a washing machine (200) or a dryer, whereas the motor (101) rotates the cavity unit (102) via a mechanical shaft (103), whereas a radial position in a cross-sectional plane (P), especially perpendicular to a center axis (C), of the shaft (103) is detected (S1) and provided to a control unit (S2), whereas the control unit provides (S3) to the motor (101) pulse width modulated signals (PWM1, PWM2, PWM3, PWM4, PWM5) for controlling the motor (101) based on the detected radial position of the shaft (103), whereas the pulse width modulated signals (PWM1, PWM2, PWM3, PWM4, PWM5) are configured such that the radial position is changed in direction to a desired radial position of the shaft (103).

10. Machine-readable program code (106) for a control unit (105) of a device (100) according to one of the claims 1 to 7, whereas the (106) program code comprises control commands which when executed cause the control unit (105) to perform the method according to claim 9.
